# EUROPEAN PATENT APPLICATION

(11) **EP 1 900 275 A1**
(43) Date of publication of application: **19.03.2008**
(21) Application number: 07018065.8
(22) Date of filing: 14.09.2007
(51) Int. Cl.: A01G 27/06

(54) **Pot type independent, built-in, self-watering device, self watering system and growing system for plants**

(30) Priority: 14.09.2006 NL 1032493
(71) Applicant: Kruijt, Johannes Elisabeth Adrianus, 1613 LB Grootebroek (NL)
(72) Inventor: Kruijt, Johannes Elisabeth Adrianus, 1613 LB Grootebroek (NL)

(57) **Abstract**

Pot type independent, built-in, self-watering device, self-watering system and growing system for plants. The device comprises a separator plate (1) to divide a pot into a water reservoir section (4) and a growing medium section (5). Filling tube (7) tube sticks out, over the top of the growing medium and enables (re)filling of the reservoir and adding of other substances to the water. Tube (8) contains a capillary wick that goes from the bottom of the reservoir into the growing medium. When reservoir capacity is still available, excess water in the growing medium can float to the reservoir via drainage holes (3) in the separator plate.

The outside of the separator plate consists of a rim of lamellas (6), fully or partly separated from each other by incisions or still connected but in such a way that they can be tom loose easily.

## Description

### Background to the invention:

It is commonplace to have plants around the house, grown in containers such as tubs of all sorts of shapes and sizes, window boxes and hanging baskets, generically termed 'pots' in this specification. The problem with pots fully filled with an organic growing medium is that they have a limited water buffer capacity, especially where it is common practice to have a drainage hole in the bottom to allow excess water to exit. Closing the hole is not an option as over-watering and/or heavy rainfall could cause the roots to drown whereas they need air as much as they do water.
Several self-watering devices have been developed over the years:
1. There are devices that comprise of an outer plastic pot with some sort of factory built-in water reservoir. As such the device can not be used with any other pot then the one it is integrated with.
   Some of such devices, such as described in WO0069250A1, contain an upward heightened drainage hole so that a water reservoir forms below the level of this drainage pipe. These systems are however fully filled with growing medium, hence limiting the maximum water buffer capacity of the reservoir tremendously and also not offering an optimal environment in that area for root growth, given the water saturation of the growing medium up till the drainage hole.
   The same counts for devices where the reservoir is set as an outer pot around an inner pot with the growing medium.
   Other devices use a closed-off water reservoir at the bottom of the pot, with no direct contact of growing medium and water. Those systems are however dependent on roots to grow into the water reservoir before any water can be transported upwards, thereby giving no buffer capacity until that time. These devices also require extra cleaning at the end of season to remove the roots that have grown through the mesh that separates the two layers.
   Furthest developed built-in devices, as described in GB 1170409A, USD49487SS 1 and WO0235918A1, use a capillary wick or mat to allow water from the reservoir to rise into the growing medium. This method alleviates the restriction that roots would have to grow into the reservoir, for the reservoir to be of value.
   The consumer's choice is however still restricted to pots that have these integrated self-watering devices without the option to use such device in a pot of one's own choice.
2. Another type of reservoir is based on the use of a separator plate in combination with closed pots, dividing the pot in a water reservoir and a growing medium part.
   Patent AU2004100293 describes a ceramic pot, with a side opening, described as an outwardly projecting lower lip, for easy filling of the lower part of the pot, which is then the reservoir. This opening is also then the opening for drainage of excess water. Major limitation of this device is that it requires the pot to not have a drainage hole in the bottom, which is uncommon with most commercial pots.
   On top of this only closed pots with the mentioned side opening form a practical combination as a regular closed pot would have no drainage at all with risk of the pot becoming waterlogged due to over-watering or heavy rainfall.
   This therefore limits the choice of pot and would not allow the device to be used with any pot type that has a drainage hole in the bottom, as is common practice.
3. Some devices, such as described in EP0126574, JP2003116378, US6418664B1, US2003009940A1 and USD490745SS1</plcit>, are based on some sort of external reservoir, are based on some sort of external reservoir where water gets fed into the growing medium by capillary force, gravity or water pressure.
   Those types of devices however limit the ornamental value of the pot plus plants by having the need for an extra eye-catching device.
   For most hanging pot types those devices are not useable and for commercial growers not viable as they hamper internal and external logistics of pots.
4. Dug-in reservoirs for pots have been proposed in GB2051538A, GB2253328A, GB2244904A and GB 2272142, in which water from a reservoir is conducted to the growing medium via a capillary wick or via a porous wall of this reservoir, to the surrounding growing medium.
   These types of self-watering devices allow use in a wide range of pots.
   One limitation of these devices is that, given the shape of the reservoir, excess water in the growing medium seeps to the bottom of the pot and leeks out, rather than that it is fed back into the reservoir, thereby limiting the usefulness of the water buffer.
   Secondly it does not allow for maximum use of the available space in the bottom of the pot for water buffering. Both limitations decrease the maximum period between watering sessions. Thirdly the rigidness of the reservoir will also limit the flexibility in use over as wide a number of pot interior shapes as possible.

### Objective of the invention:

It is therefore the general objective of this invention to provide practical, built-in, self-watering devices for a wide range of commercially available pots, with maximum use of the available space in the lower part of these pots, for water storage, offering an optimal environment for the plant roots throughout the growing period.
Moreover is it the objective of this invention to offer a self-watering system that supplies water to a growing medium from a water reservoir. The specific functioning will depend on a combination of the self-watering device, the growing medium of choice, plus possible additives in the growing medium to optimize the air-water balance in the growing medium. Lastly is it the objective of this invention to offer a growing system for plants whereby these plants get supplied automatically by water as well as growth-enhancing elements, throughout the growing period of these plants. The specific functioning will depend on the combination of the self-watering system, the choice of plant species and varieties plus the possible growth-enhancing additives in the reservoir water or growing medium.

### Outline of the invention:

The invention comprises a separator plate for use in dividing a container into a growing medium section and a water reservoir section. Underneath, attached to the separator plate, is a bag-type, closed water reservoir, large enough to follow the shape of the lower part of the pot when filled with water. This secures the maximum use of the available space hence water buffer as well as maximum flexibility in application of the device, irrespective of the interior shape of the pot.
The bag can be attached to the bottom side of the separator plate in several ways such as having a elastic band attached to the rim of the bag, enabling the bag to be stretched around protruding hooks on the bottom side of the plate. Other possible methods could be, for example, to glue, seal, tape or clasp the bag to the bottom side of the plate.
Also attached underneath the separator plate are several legs to allow use in pot types where the outer pot shape and lacking stiffness might cause the plate to drop too far to the bottom, thereby not giving sufficient reservoir capacity. One example where this would be the case would be with coir and rim hanging baskets.
The outside of the separator plate consists of a rim of lamellas, fully or partly separated from each other by incisions or still connected but in such a way that they can be torn loose easily.

This allows flexible use of the self-watering device over a range of pot diameters (round pots) or lengths times widths (rectangular pots).
When the plate is pushed into a pot with a similar or somewhat smaller size then the plate, the lamellas will bend upward and cross over each other, thereby decreasing the outer size of the plate, at the same time giving the plate the ability to hang in the interior of the pot.
Not only does this enable the plate to be clasped to the pot interior, it will also avoid that excess water in the growing medium will seep largely to the drainage hole at the bottom of the pot, as long as there is capacity available in the reservoir.
The maximum range of diameters that can be covered by one plate type will depend on the sturdiness of the plate material, the chosen concavity of the plate as well as the length of the lamellas.
The cracks between the lamellas are used to allow excess drainage water, over the maximum capacity of the reservoir, to seep around the reservoir and exit the pot at the bottom.
When capacity is still available, drainage water can float to the reservoir via a set of drainage holes in the separator plate.

On top of the separator plate there are two tubes. One of them contains a capillary wick that goes from the bottom of the reservoir into the growing medium and feeds the medium with as much water as the medium can hold, thereby not drowning the roots. Any water added over the maximum capacity of the growing medium moves back down into the reservoir or exits the pot, should the reservoir be full.
Alternatively, several tubes with capillary wicks might be used, depending on the required self-watering capacity.
A second tube sticks out, over the top of the growing medium and enables (re)filling of the reservoir. Diameter of this tube should be such that quick filling with a watering can or garden hose is feasible.
This filling tube could possibly be elongated with an extra extension to allow the system to be used in higher pots or in cases where plant growth might otherwise completely hide the filling tube from the eye.
Possibly both wick tube and filling tube have conical shapes, broader at the base then at the top. Such forms could facilitate stacking of the device and optimise use of space during storage and transport as well as decrease production time of the plates.

Although the most common form of the separator plate will be circular, in line with the shape of most commonly used pots, also other shapes can be made.

The number, size and placement of the legs will depend on the size of the plate and required minimum space for the water reservoir and might even be left out altogether. These legs could be hollow but are not necessarily so.
The optimal functioning of the self-watering device will depend also on the choice of growing medium plus additives to the growing medium that could influence the water-air balance in the growing medium. Also the type of water influences the functioning of the device thereby making the combination of factors a unique self-watering system.
The combination of the above-mentioned factors plus the choice of plant species and varieties, as well as growth-enhancing additives such as plants nutrients, bio stimulants, hormones, insecticides and/or fungicides, added to the reservoir water or the growing medium make the total a unique growing system.

### Description of example:

Having outlined the nature of the present invention, an example of a pot type independent self-watering device will be described with reference to the accompanying drawings, in which:
Figure 1 is a perspective view from the side of the separator plate as it will shape when pushed down into a conical, cylindrical shaped pot.
Figure 2 is a perspective view from the side of the separator plate as it will shape when set in a half-ball shaped pot, like with certain hanging baskets.
Figure 3 is a top view on a possible separator plate, which is of alternative design to that shown in the assembly of Figure 1.
Figure 4 shows one of several possible methods to attach a bag-like water reservoir to the separator plate, in this particular case using a plastic bag with a sown-in elastic band that can be stretched around a circle of hooks on the plate.

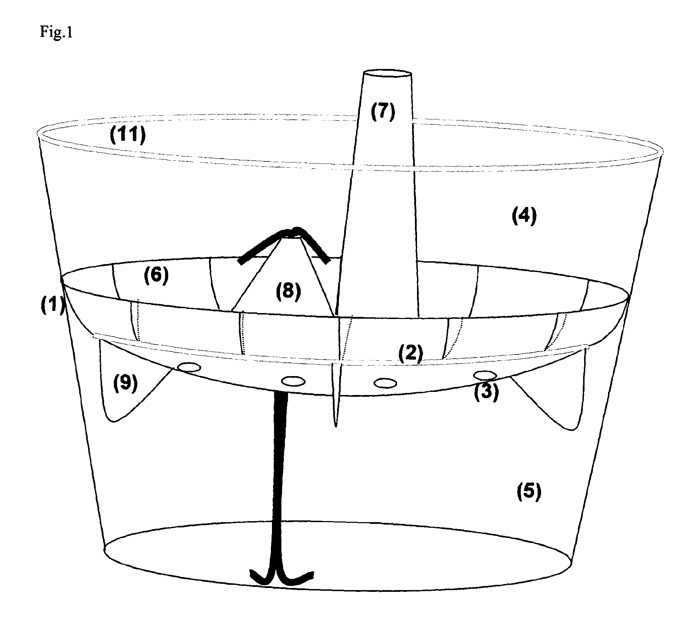

With reference to Figure 1, separator plate 1 is shown inside outer pot 11, the latter shown as being transparent to allow good visibility on the self-watering device. For that same reason the actual reservoir bag has been left out of this drawing but would in practice be attached to rim 2, either by means of hot seal, stretched around it with use of a loose elastic band or one that has been sown or sealed into the rim of the bag or tide around the rim with a loose cord or ribbon or one that has been sealed or sown into the rim of the bag.
Drainage holes 3 fall within the space of rim 2 so that any excess water from the growing medium section 4 of the pot will leak back into the reservoir section 5.
Lamellas 6 are bent upwards, crossing each other when doing so, so as to form a smaller diameter then the separator plate would have unbent.
Should the reservoir be filled to its maximum capacity, then any excess drainage water can seep between the lamellas 6, around the bag reservoir, to exit the pot through the drainage hole at the bottom.
The length of the incisions between the lamellas 6, possibly made flexible by having a loose connection still in place, enabling the user to rip the incisions open up to the desired length, in combination with the stiffness of the chosen material, will define the maximum diameter interval of round pots e.g. the maximum width and length interval of rectangular pots, that the device can be used for.
Filling tube 7 as well as capillary wick tube 8 are both drawn in a conical form as such shape will allow better nesting of plates in storage and transport and possibly faster production.
For the same reason of efficient nesting and fast production, legs 9 could have straight vertical outer sides and start wide at their base, on the plate side.

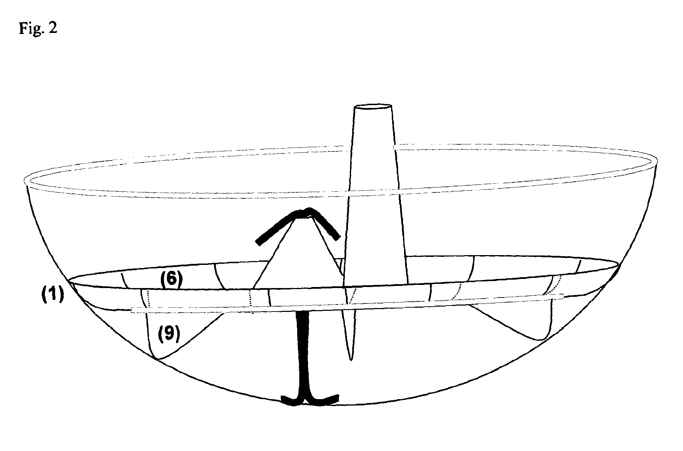

With reference to Figure 2, the same type of self-watering device is demonstrated as in the example of Figure 1, however now set in a half-ball shaped hanging basket, like the widely available coir and rim types.
Given the curve of this outer pot the lamellas 6 might not be able to stick to the inner-wall, which could cause the separator plate to sink in too deep, thereby not leaving any space for the water reservoir.
Legs 9 now demonstrate their value as they assure that there remains enough space available at all times, irrespective of the angle of the outer pot.

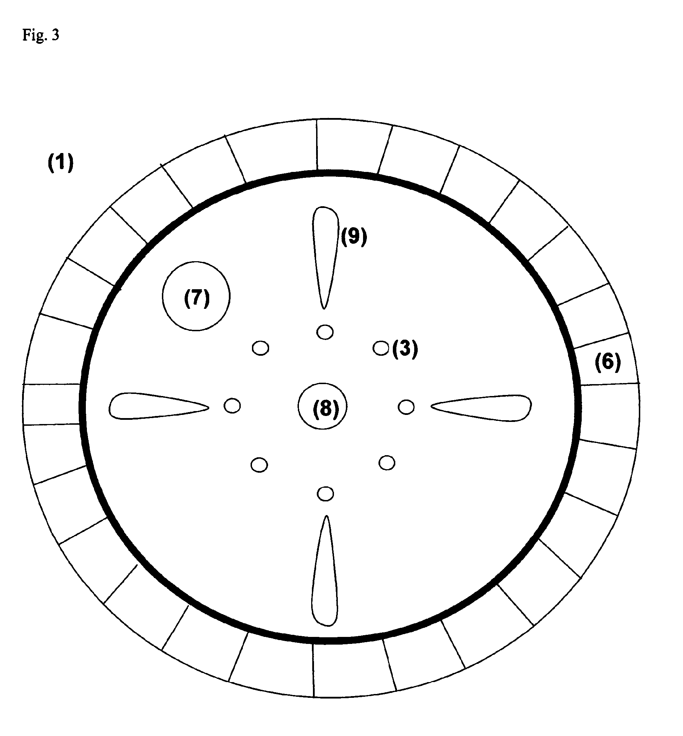

With reference to Figure 3, an example of a separator plate 1 is demonstrated from above with legs 9, filling tube 7 , capillary wick tube 8 and drainage holes 3.
Actual positions of filling tube 7 and capillary wick tube 8 on the plate will depend on the optimal combination of strength of the chosen construction, related to those positions, available space on the plate, necessary space for other elements like legs 9 and drainage holes 3 and optimal diameter of the cones shaped tubes 7 and 8, allowing for maximum ability to nest.
From the perspective of the user of the device one would think that the ideal place of the capillary wick tube 8 would be in the middle so as to have most even spread of capillary water over the pot and that the filling tube 7 would be on the side to allow easiest access at (re)filling.
Positions and number of drainage holes 3 are also quite flexible as long as the holes' diameter is such that it will let drainage water pass through unrestrained.

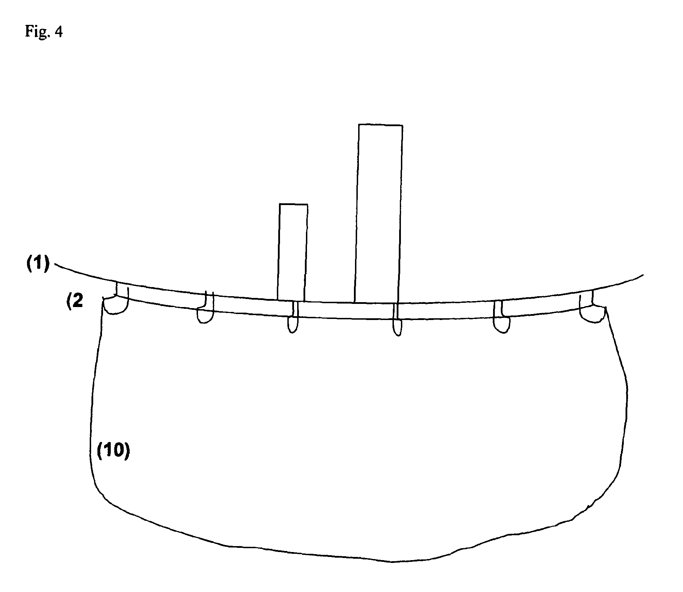

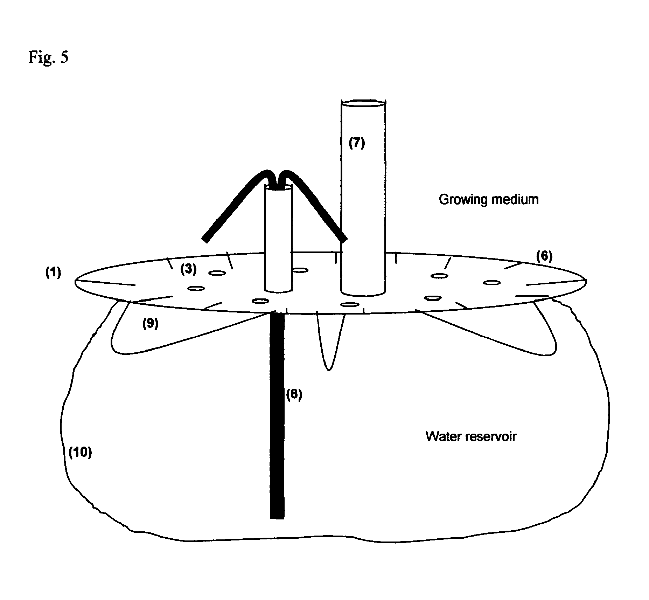

Figure 4 shows one example of a device to attach the bag-like reservoir 10 to the separator plate 1. In this particular case hook-like extensions 2, set in a circle underneath the separator plate, allow the attachment of a plastic bag, stretched around these hooks with use of a loose elastic band or one that has been sown or sealed into the rim of the bag or tide around the hooks with a loose cord or ribbon or one that has been sealed or sown into the rim of the bag.

## Claims

1. A built-in self-watering device comprising a separator plate made from a water impermeable material with a rim of flexible lamellas, separated from each other via incisions, a bag-like water reservoir, attached to the bottom side of the plate by sealing, gluing, clasping or stretching, a filling tube for the water reservoir as well as a tube for a capillary wick on top of the plate, drainage holes through the plate, all within the area of where the bag has been attached to the bottom side, plus legs on the bottom side.

2. A built-in self-watering device according to Claim 1 where a bag-like water reservoir has been stretched around a ring of protruding hooks on the bottom side of the separator plate.

3. A built-in self-watering device according to Claim 1 where excess water in the growing medium, in combination with a full water reservoir underneath the plate, can seep around this water reservoir, allowing the water to leave the pot via the drainage hole in the bottom of that pot.

4. A built-in self-watering device according to Claim 1 where lamellas are used that are weakly connected, which can then be torn apart if necessary to allow the plate to fit into the pot of choice.

5. A built-in self-watering device according to Claim 1 where an inner water reservoir is made out of a very flexible water-tight material, allowing the reservoir to follow the inner shape of the bottom part of the pot, thereby ensuring maximum use of the available space for water storage.

6. A built-in self-watering device according to Claim 1 where the legs have been left out.

7. A built-in self-watering system comprising:
a. The built-in self-watering device according to Claim 1
b. A growing medium for plants
c. Water as contained in the water reservoir

8. A built-in self-watering system according to Claim 7 where material is added to the growing medium to increase the porosity and hence optimize the air-water balance in the growing medium.

9. A built-in self-watering system according to Claim 7 where material is added to the growing medium to increase the water buffer capacity of the growing medium.

10. A growing system for plants comprising:
a. The built-in self-watering device according to Claim 1
b. A growing medium for plants
c. Water as contained in the water reservoir
d. Living plants

11. A growing system for plants according to Claim 10 where plant growth enhancing substances are added to the growing medium or the reservoir water.

12. A growing system for plants according to Claim 10 where the plant growth enhancing substances are organic or an-organic fertilizers.

13. A growing system for plants according to Claim 10 where the plant growth enhancing substances are growth regulators.

14. A growing system for plants according to Claim 10 where the plant growth enhancing substances are fungicides.

15. A growing system for plants according to Claim 10 where the plant growth enhancing substances are insecticides.

16. A growing system for plants according to Claim 10 where the plant growth enhancing substances are bio stimulants.
